# EUROPEAN PATENT APPLICATION

(11) **EP 4 618 468 A1**
(43) Date of publication of application: **17.09.2025**
(21) Application number: 24162860.1
(22) Date of filing: 12.03.2024
(51) Int. Cl.: H04L 9/00, G06Q 50/06

(54) **A COMPUTER-IMPLEMENTED METHOD AND SYSTEM FOR TEMPORAL CORRELATION, OPTIMIZED UTILIZATION AND DEVALUATION OF DIGITAL RENEWABLE RESOURCE CERTIFICATES**

(71) Applicant: Siemens Energy Global GmbH & Co. KG, 81739 München (DE)
(72) Inventor: Rathgeb, Andreas, 91099 Poxdorf (DE)

(57) **Abstract**

A computer-implemented method and system for temporal correlation, optimized utilization and devaluation of digital renewable resource certificates used for a resource conversion chain (RCC) having resource production assets adapted to generate at least one resource and having con-version assets adapted to consume resources for generation of products, the method comprising the steps of: providing (S1) resource related data by records of the assets within the resource conversion chain (RCC); performing (S2) a compliance check to evaluate whether the resource related data provided by a record of an asset complies with ma-chine interpretable requirements provided in a scheme; generating (S3) a non-fungible certificate token (CNFT) as a digital renewable resource certificate if the compliance check provides a positive evaluation result and storing the generated non-fungible certificate token (CNFT) in a digital wallet; and devaluating (S4) automatically a non-fungible certificate token (CNFT) stored in the digital wallet when the associated resource is consumed by a re-source consumption asset and proof thereof is provided.

## Description

### BACKGROUND

The invention relates to a computer-implemented method and a system for temporal correlation TC, optimized utiliza-tion and devaluation of digital renewable resource certif-icates used in a resource conversion chain, RCC, in par-ticular the production and consumption of a resource such as energy, using non-fungible tokens, NFTs.

Limitation of global warming requires greenhouse gas reduction. The IPCC (Intergovernmental Panel on Climate Change) has calculated a global budget of greenhouse gas emissions until the year 2050 to keep the global warming in the limits of 1,5°C to reduce environmental impacts on mankind. This budget is shared between all nations world-wide and governed by national law.

National governments therefore monitor and control the available energy budget with national energy specific registries and certificates, such as Guarantees of Origin (GoOs) per megawatt hour for electricity or proof of sustainability.

The main renewable energy sources are of biological or non-biological origin. For these energy types voluntary renewable energy certification schemes and recognized na-tional regulations/registries do already exist.

Because of limited standardization and a lack of real-time data integration, all market players involved struggle with complexity and manual reporting to governmental rec-ognized registries.

For electricity and for other energy types, national registries are used to provide certificates for each type of energy. An example is the register for electrical guaran-tees of origin (GOs). Each grid operator has to request issuing of produced and devaluation of consumed clean electricity of his grid connected renewable power produc-ing plants.

The conventional technology as well as the existing procedures do not support on-time certificate compliance checks. Typically reporting periods are weeks or even months. If issues are detected at the end of the reporting period, typically a substantial part of incompliant energy may need mitigation and manual transactions. As a consequence, data integrity and transparency gets lost.

The conventional approach does not include all market players into the process. As a consequence, the energy producing economic operator, as well as the energy consuming economic operator are not involved in the reporting. The reporting is done in a conventional system for instance by the electrical grid operator who acts as a mid-dle man and does manage the power purchase agreements (e.g. for electrical energy) with a lot of effort and with the inherent risk of data and integrity loss.

Certificates in general can describe different kinds of qualities or characteristics of goods and products. Supply chains and resource conversion chains require a fast and flexible provision of certificates for proper and transparent operation. However, conventional assessments, auditing and certification processes are performed mostly manually. Therefore conventional certification processes are cumbersome, slow and error prone.

For energy value chains, energy as a resource can be converted into diverse energy carriers to fit a variety of user requirements and use cases. In addition, governments or other public organizations request to receive detailed information used to track sustainability parameters such as the existence of a sufficient temporal correlation be-tween electricity production and electricity consumption.

For covering their temporal energy demand energy consumers can source power from various power suppliers (e.g. wind, water, sun based energy producing systems) to achieve a sufficient temporal correlation between the power production and the consumed power. Consequently a surplus of renewable energy is paid and full usage cannot be achieved. Energy, e.g. in the form of electrical energy, is supplied from a supply grid to consumers with unknown consumption purpose. Certificates without proven consumer and consump-tion can then only be recorded statistically. In case of renewable energy shortages, the production of goods may need to be stopped or otherwise the renewability of the produced goods is inexistent or incomplete.

Clean energy certificate utilization is limited due to several regulatory and technical constraints including the availability of sufficient energy capacities, with re-quired qualities to meet the energy demand.

Another constraint is the requirement to fulfill a sufficient temporal correlation between production and consumption of resources, in particular electrical energy, to resolve grid storage limitations.

For instance, a temporal correlation (TC) condition can be considered complied with if renewable liquid and gaseous transport fuel of non-biological origin is produced during the same calendar month as the renewable electricity produced under the renewables power purchase agreement or from renewable electricity from a new storage asset that is located behind the same network connection point as the electrolyzer or the installation generating renewable electricity, that has been charged during the same calen-dar month in which the electricity under the renewables power purchase agreement has been produced.

Regional and geographical correlation form additional constraints with respect to the management of energy flow bottlenecks (point of grid injection, transfer capacity, point of grid extraction). Further, it is necessary to integrate a clean energy flow into the power supply grid with minimized impact on the stability of the grid.

In addition market participants seek to simplify energy or other resource procurement with minimized dependencies regarding sustainable qualities of traded energy purchasing contracts over the counter, e-auction or option-business.

Devaluation of consumed clean energy or of another con-sumed resource or good produced with the help of clean energy shall therefore support a precise allocation to the relevant product or good, maximize utilization of renewable energy and monetizing of unused certificates and the exploitation of GHG removal quality.

Up to now energy consumers and energy producers have to request recognized registries and report their energy consumption or energy production based on existing metering and data acquisition technologies, which include grid me-ters, grid operator reports, control system reports, manual readings from the meter displays, compilation into reports and repetitive audits by a contracted certification body.

Competitor Granular provides a service, that enables load balancing based on load profiles. The load balancing al-lows to combine electricity producing assets, so that power consumption by a specific consumer leads to a minimized loss of certificates. In this case all certificates of a single production asset still has to be managed. Subsets of production cannot be shared with other consumers. Conventional energy certificates are based on time periods (traditional imbalance settlement periods of e.g. 15 minutes), but neither on energy amounts nor on GHG CO2e values. As a consequence, also time periods with little or no energy production need to be processed with little val-ue and high computational effort.

Due to dependencies to required renewability data provided by national registries, energy traders use power purchase agreements with long-term over the counter trades. However, these trades are very inflexible and costly compared to e-auctions.

### SUMMARY OF THE INVENTION

Accordingly, it is an objective of the present invention to provide a method and system to increase the efficiency of usage and processing of digital renewable resource certificates for ensuring that resources used in a resource conversion chain, in particular consumed energy, originate from renewable energy sources and comply to applied scheme requirements, such as temporal correlation.

This objective is solved by a computer-implemented method for optimized temporal correlation, utilization and devaluation of digital renewable resource certificates used for a resource conversion chain comprising the features of claim 1 and by a system for managing a resource conversion chain comprising the features of claim 23.

The invention provides according to a first aspect a computer-implemented method for temporal correlation, opti-mized utilization and devaluation of digital renewable resource certificates used for a resource conversion chain having resource production assets adapted to generate at least one resource and conversion assets adapted to con-sume resources for generation of products, the method com-prising the steps of: providing resource related data by records of the assets within the resource conversion chain; performing a compliance check to evaluate whether the resource related data provided by a record of an asset complies with machine interpretable requirements provided in a scheme; generating a non-fungible certificate token (CNFT) as a digital renewable resource certificate if the compliance check provides a positive evaluation result; and devaluating the non-fungible certificate token (CNFT) automatically when the associated resource is consumed by a resource consumption asset and proof thereof is provid-ed.

In a possible embodiment of the computer-implemented method for temporal correlation, optimized utilization and devaluation of digital renewable resource certificates used for managing a resource conversion chain the non-fungible certificate token (CNFT) is devaluated when an associated resource R (such as electrical energy eE) is consumed by a resource consumption asset and proof thereof is provided by a non-fungible resource token (RNFT)of the resource consumption asset and/or by the asset owner of the re-source consumption asset supplied to a devaluation unit performing the automatic devaluation of the associated non-fungible certificate token (CNFT)linked to the re-ceived non-fungible resource token (RNFT).

The non-fungible certificate token (CNFT) being generated as a digital renewable resource certificate if the compliance check provides a positive evaluation result can be stored in a digital wallet of the asset owner.

The provided resource related data record comprises in a preferred embodiment a non-fungible resource token (RNFT), in particular a non-fungible energy token (ENFT). A non-fungible energy token (ENFT) is a non-fungible resource token for the resource "energy".

A resource R can also comprise besides energy E carried in an energy form (e.g. electrical energy eE or chemical energy carried by an energy carrier material such as hydrogen hE) for instance another consumed, stored or produced resource R such as carbon dioxide (CO2) or water (H2O).

The computer-implemented method for optimized temporal correlation, utilization and devaluation of digital renewable resource certificates used for a resource conversion chain according to the present invention can be employed to generate digital certificates for any relevant resource consumed, stored or produced in a resource conversion chain, in particular for resources having an impact on the environment. These environment relevant resources comprise for instance energy in different energy forms and emis-sions, in particular carbon dioxide.

The resource data record, i.e. the non-fungible resource token (RNFT), and the associated non-fungible certificate token (CNFT) comprise in a preferred embodiment always a one-to-one link, so that the total data set with both parts (CNFT and RNFT) provide all information regarding the related real resource.

The invention provides according to a second aspect a sys-tem for optimized temporal correlation, utilization and devaluation of digital renewable resource certificates used for a resource conversion chain (RCC) having resource production assets adapted to generate at least one re-source and having conversion assets adapted to consume re-sources for generation of products, the system comprising: data records of the assets within the resource conversion chain adapted to provide resource related data; a compliance check unit adapted to run a smart contract executable code to perform a compliance check to evaluate whether the resource related data provided by a data record of an as-set complies with machine interpretable requirements provided in a scheme; a token generator adapted to generate a non-fungible certificate token (CNFT) as a renewable resource certificate stored in a digital wallet if the compliance check provides a positive evaluation result; and a devaluation unit adapted to devaluate a non-fungible cer-tificate token (CNFT) stored in the digital wallet when the associated resource is consumed by a resource consump-tion asset and proof thereof is provided.

The proof of resource consumption can be provided by a non-fungible resource token (RNFT) of the resource con-sumption asset and/or by the asset owner of the resource consumption asset.

A digital system is applied, that provides incremental trusted certificates, e.g. based on non-fungible token (NFTs) managed by distributed ledger technologies.

The observed worldwide climate change is caused to a major extent by the use of fossil energy sources, such as coal, oil and natural gas. In order to enforce a carbon neutral energy production, energy conversion and energy consumption the method and system according to the present inven-tion establish a trusted, transparent incremental cross sector monitoring of clean energy and related resources.

The production and consumption of carbon neutral energy requires worldwide energy transfer. As a consequence di-verse international regulations made for different energy carriers can be managed by the method and system.

To avoid greenwashing, the method and system apply a new certification principle. Other than purchasing e.g. electricity from coal fired power plants and clean energy certificates from existing market places separately (book & claim), the mass balancing principle applied by the method and system according to the present invention requires, that clean energy certificates can only be received from the contracted energy production asset. Moreover a compli-ant energy production and consumption can be tracked based on corresponding power purchase agreements.

The method and system according to the present invention allow to easily track the renewable aspect of energy throughout the resource conversion chain RCC. The proof of compliance is provided fast and can be easily shared and reported in a transparent and traceable manner.

The method and system according to the present invention are able to manage accountability and liability of organizations.

The method and system according to the present invention apply a digital trusted technology, in particular a permissioned blockchain technology. A permissioned block-chain is a controlled and private network where access to participate and view the data is restricted to authorized entities.

A distributed ledger technology (DLT) is a special form of electronic data processing and storage. This storage technology allows subscribers of the network to have common writing and reading authorization. By contrast with a conventional centrally managed database, there is no need in this network for a central entity that performs new en-tries in the database. Unlike conventional distributed da-ta bases the distributed ledger technology applies a con-sensus mechanism. New data records can be added at any time by the subscribers themselves. A subsequent updating process ensures that the latest state of the database is always available to all of the subscribers. A particular configuration of the distributed ledger is a block chain BC. The distributed ledger technology is a form of peer-to-peer network.

The consensus mechanism applied in the distributed ledger technology can comprise proof of work, proof of stake, proof of authority or any other consensus mechanism suita-ble for the respective use case.

The method and system according to the present invention enable digital trusted transactions with a distributed consensus mechanism. The system provides digital wallets to receive, store or send digital certificates and enables computation and networking in the cloud. The digital certificates comprise non-fungible certificate tokens (CNFT).

An asset is a technical entity that is adapted to produce, consume, process, store or to convert a resource such as energy. Each asset is owned by an organization.

A non-fungible token (NFT) is a digital object that is recorded on a block-chain and has a unique digital identifier. A non-fungible token (NFT)is used to certify owner-ship and authenticity. It cannot be copied, substituted, or subdivided. Non-fungible tokens (NFTs) are unique cryptographic tokens that exist on a block chain and cannot be replicated.

Schemes comprise machine-readable representations of real world specifications and regulations. The schemes are used to evaluate and confirm compliance to these specifications and regulations inside the system. Schemes can be created according to scheme holder definitions. There can be different applicable schemes.

A scheme holder can define different applicable schemes for different use cases and/or for different resources, in particular for different energy types of produced or consumed energy such as Electricity Scheme, a Hydrogen(H2)-scheme or an E-fuel-Scheme and/or for different consumed and/or produced resources such a carbon dioxide (CO2).

In a possible embodiment of the computer-implemented meth-od for optimized temporal correlation, utilization and devaluation of digital renewable resource certificates used for a resource conversion chain RCC the resource R com-prises energy E.

Other resources R can comprise for instance water H2O or raw materials consumed during production of products by energy consuming production assets of the resource conver-sion chain RCC.

In a possible embodiment of the computer-implemented meth-od for optimized temporal correlation, utilization and devaluation of digital renewable resource certificates used for a resource conversion chain a non-fungible energy to-ken (ENTF) is generated automatically as soon as an incre-mental amount of energy is produced by an energy produc-tion asset and reported as energy related data by the en-ergy production asset.

The system can produce incremental records (energy non-fungible tokens or ENFTs) per asset. The incremental rec-ord can be configured per product of an asset, so that amounts of energy or single products can be configured. One or several products can be configured per asset. This enables an on-time compliance check that can be executed depending on production instead of a fixed reporting time period.

The system makes use of non-fungible resource tokens (RNFTs), in particular of non-fungible energy tokens (ENTFs), and of non-fungible certificate tokens (CNFTs). The non-fungible Energy token (ENFT) documents an incre-mental amount of energy with immutable and configurable data. The non-fungible certificate token (CNFT) documents the compliance to schemes that can derive from declara-tions.

In a possible embodiment of the computer-implemented method for optimized temporal correlation, utilization and devaluation of digital renewable resource certificates used for a resource conversion chain according to the present invention the provided resource related data record comprises a non-fungible resource token (RNFT), in particular a non-fungible energy token (ENTF) which is generated automatically as soon as an incremental amount of energy is produced by an energy production asset and reported as energy related data by the energy production asset.

In a possible embodiment of the computer-implemented meth-od for optimized temporal correlation, utilization and devaluation of digital renewable resource certificates used for a resource conversion chain according to the present invention the proof of resource consumption is provided by the non-fungible resource token (RNFT) of the resource consumption asset and/or by the asset owner of the re-source consumption asset.

In a possible embodiment of the computer-implemented meth-od for optimized temporal correlation, utilization and devaluation of digital renewable resource certificates used for a resource conversion chain according to the present invention the non-fungible resource token (RNFT) comprises a token time stamp and assigned load pattern data.

In a possible embodiment of the computer-implemented method for optimized temporal correlation, utilization and devaluation of digital renewable resource certificates used for a resource conversion chain according to the present invention the load pattern data is assigned e.g. as immutably stored DLT off-chain data, to a non-fungible re-source token (RNFT) according to national grid regula-tions.

Off chain data can be associated forgery-proof with a blockchain by storing a hash value of the data set in the blockchain.

In a possible embodiment of the computer-implemented meth-od for optimized temporal correlation, utilization and devaluation of digital renewable resource certificates used for a resource conversion chain according to the present invention the load pattern data recorded with the non-fungible resource token (RNFT) is available for devalua-tion with a transferred non-fungible certificate token (CNFT).

In a possible embodiment of the computer-implemented meth-od for optimized temporal correlation, utilization and devaluation of digital renewable resource certificates used for a resource conversion chain according to the present invention the load pattern data for consumption of a resource, in particular energy, by a resource conversion as-set or by a resource consumption asset is recorded with a non-fungible resource token (RNFT), in particular with a non-fungible energy token (ENTF).

In a possible embodiment of the computer-implemented meth-od for optimized temporal correlation, utilization and devaluation of digital renewable resource certificates used for a resource conversion chain according to the present invention the load pattern data of an available non-fungible certificate token (CNFT) provided in a digital wallet and the load pattern data of the associated non-fungible resource token (RNFT), in particular the associ-ated non-fungible energy token (ENTF), is converted into scheme load pattern data based on an applied scheme tem-poral correlation requirement.

In a possible embodiment of the computer-implemented meth-od for optimized temporal correlation, utilization and devaluation of digital renewable resource certificates used for a resource conversion chain according to the present invention the devaluation is performed with the scheme load pattern data by matching consumption load pattern da-ta against the load pattern data of the available non-fungible certificate token (CNFT).

In a possible embodiment of the computer-implemented meth-od for optimized temporal correlation, utilization and devaluation of digital renewable resource certificates used for a resource conversion chain according to the present invention the devaluation of the non-fungible certificate tokens (CNFT) stored in the digital wallet is performed by a devaluation optimizer such that a minimum of the non-fungible certificate tokens (CNFTs) is devaluated by checking possible variants.

In a possible embodiment of the computer-implemented meth-od for optimized temporal correlation, utilization and devaluation of digital renewable resource certificates used for a resource conversion chain the energy related data recorded in the non-fungible energy token (ENTF) is checked by a compliance algorithm against machine inter-pretable scheme requirements of a scheme provided by a scheme holder to generate an associated non-fungible cer-tificate token (CNFT) if the compliance check provides a positive evaluation result.

In a possible embodiment of the computer-implemented meth-od for optimized temporal correlation, utilization and devaluation of digital renewable resource certificates used for a resource conversion chain the resource related data comprises near real time data including machine signals.

In a possible embodiment of the computer-implemented meth-od for optimized temporal correlation, utilization and devaluation of digital renewable resource certificates used for a resource conversion chain the resource related near real time data is monitored and communicated by a gateway of the respective asset or by a gateway of a site having several assets.

In a possible embodiment of the computer-implemented meth-od for optimized temporal correlation, utilization and devaluation of digital renewable resource certificates used for a resource conversion chain the resource related near real time data is received from other data providers, in particular from a grid operator or from a service provid-er.

In a possible embodiment of the computer-implemented meth-od for optimized temporal correlation, utilization and devaluation of digital renewable resource certificates used for a resource conversion chain the non-fungible energy token (ENTF) stores information comprising: an NFT Identi-fier, an asset Identifier, a meter Identifier ID, an ener-gy type, a token size of the token, a timestamp, a token quality, a total CO2 equivalent per token, and an energy amount.

In a possible embodiment of the computer-implemented meth-od for optimized temporal correlation, utilization and devaluation of digital renewable resource certificates used for a resource conversion chain the non-fungible token (NFT) identifier to reference the associated non-fungible resource token (RNFT) and the generated non-fungible cer-tificate token (CNFT) comprises additional certification information including the applied schemes, scheme version of the applied schemes and the certification body.

In a possible embodiment of the computer-implemented meth-od for optimized temporal correlation, utilization and devaluation of digital renewable resource certificates used for a resource conversion chain the scheme comprises scheme metadata including a scheme title, a scheme holder, a scheme revision and a scheme validity of the scheme, communication restrictions, requirements regarding the certification process, requirements regarding the certifi-cate holder, and requirements regarding the respective re-source.

In a possible embodiment of the computer-implemented meth-od for optimized temporal correlation, utilization and devaluation of digital renewable resource certificates used a resource conversion chain the non-fungible certificate token (CNFT) is transferred automatically between digital wallets of asset owners on the basis of a resource pur-chase agreement between the asset owners.

The certificate transfer can comprise a pay-as-produced transfer or a Pay-per-use transfer.

Each transfer is configurable according to a given pur-chase agreement if both parties, producer and consumer are registered inside the system. The system can e.g. reflect the validity of a contract between an electricity producer and a hydrogen producer, so that during the configured time the digital certificates can be exchanged automati-cally between the configured digital wallets. The "cer-tificate transfer" can store the checksum of the corre-sponding purchase agreement for auditability.

In a possible embodiment of the computer-implemented meth-od for managing a resource conversion chain the devalua-tion comprises a token time stamp devaluation.

There are two entities that have time stamps. These enti-ties comprise the metered energy E and the associated en-ergy token (ENFT) in the system.

The devaluation of digital certificates is performed in a preferred embodiment according to a metered resource consumption or, if no consumption has taken place, by expiration. Devaluation and expiration of digital certificates can be defined by the certification scheme and does happen automatically inside the system.

In a possible embodiment of the computer-implemented meth-od for optimized temporal correlation, utilization and devaluation of digital renewable resource certificates used for a resource conversion chain the non-fungible certifi-cate token (CNFT) is devaluated automatically by expira-tion as defined in a scheme, in particular if no consump-tion has taken place.

In a possible embodiment of the computer-implemented meth-od the resource comprises an environment relevant re-source, in particular energy or carbon dioxide.

In a possible embodiment of the computer-implemented meth-od for optimized temporal correlation, utilization and devaluation of digital renewable resource certificates used for a resource conversion chain the resource related data provided by a record of an asset within the resource conversion chain comprises resource origin data, resource amount data, resource type data, a resource production time or resource consumption time and asset property data.

Where appropriate, the above-mentioned configurations and developments can be combined implementations can be com-bined with each other as desired, as far as this is rea-sonable. Further possible configurations, developments and implementations of the invention also include combina-tions, which are not explicitly mentioned, of features of the invention which have been described previously or are described in the following with reference to the embodiments. In particular, in this case, a person skilled in the art will also add individual aspects as improvements or supplements to the basic form of the present invention.

### BRIEF DESCRPTION FIGURES

The present invention is described in greater detail in the following on the basis of the embodiments shown in the schematic figures of the drawings, in which:
Fig. 1 shows a flow chart to illustrate a possible exemplary embodiment of a computer-implemented method according to the present invention;
Fig. 2 illustrates schematically the operation of a computer-implemented method in an exemplary system according to the present invention;
Fig. 3 illustrates a block chain which can be used in a possible embodiment of the method and system ac-cording to the present invention.
Fig. 4 shows a flow chart to illustrate a temporal correlation procedure applied a possible exemplary embodiment of computer-implemented method accord-ing to the present invention;
Fig. 5 illustrates the operation of a computer-implemented method in an exemplary system accord-ing to the present invention;
Fig. 6 illustrates the operation of a computer-implemented method in an exemplary system accord-ing to the present invention;
Fig. 7 shows diagrams for illustrating the operation of a computer-implemented method according to the present invention;

The appended drawings are intended to provide further understanding of the embodiments of the invention. They illustrate embodiments and, in conjunction with the description, help to explain principles and concepts of the invention. Other embodiments and many of the advantages mentioned become apparent in view of the drawings. The ele-ments in the drawings are not necessarily shown to scale.

In the drawings, like, functionally equivalent and identically operating elements, features and components are provided with like reference signs in each case, unless stat-ed otherwise.

### DESCRIPTION OF EMBODIMENTS

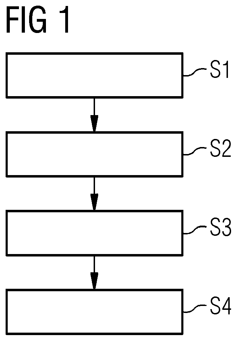

As illustrated in the flow chart of Fig.1 a computer-implemented method for managing a resource conversion chain RCC according to an aspect of the present invention can comprise several main steps S.

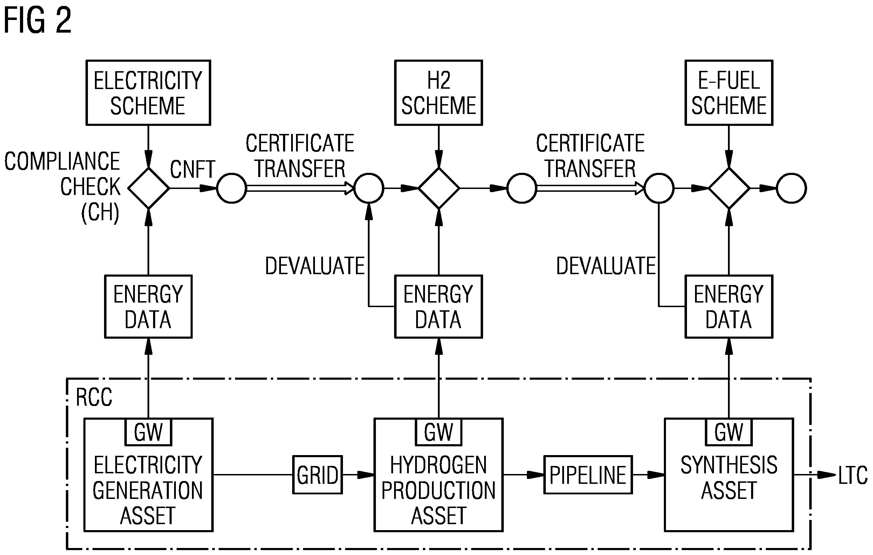

The resource conversion chain RCC comprises resource production assets adapted to generate at least one resource and conversion assets adapted to consume resources for generation of products or other resources as illustrated in Fig.2.

In the example illustrated in Fig. 2 the resource conver-sion chain RCC comprises three stages. The number of stag-es can vary depending on the use case. In an exceptional use case even a single energy producing/converting asset can use the technology. In this case, e.g. for an electro-lyzer, the hydrogen H2 produced can be tracked together with the consumed electricity. The electricity certifi-cates may also be proven by traditional guarantees of origin. In the illustrated example of Fig.2 the produced and converted resource R comprises energy.

At a first stage of the resource conversion chain RCC electricity is generated by at least one electricity generation asset including one or more energy sources.

The energy sources can comprise renewable energy sources such as wind power plants, or photovoltaic module arrays and other energy sources such as nuclear power plants. Al-so conventional energy sources can be integrated in the system according to the present invention. The generated energy comprises energy of a certain energy type, e.g. electrical energy.

At a second stage of the resource conversion chain RCC hydrogen H2 is produced by at least one hydrogen generation asset receiving the electrical energy produced by the at least one electricity generation asset of the first stage of the resource conversion chain RCC via a power grid to produce hydrogen H2 (e.g. from H2O by electrolysis) .

At a third stage of the resource conversion chain RCC a synthesis product such as methanol is produced by at least one synthesis asset on the basis of hydrogen H2 produced by the at least one hydrogen generation asset of the sec-ond stage of the resource conversion chain RCC and re-ceived via a pipeline or other transport facilities.

The methanol produced at the third stage can then be transported in a logistic transport chain LTC to a plural-ity of consumers. In a possible embodiment the logistic transport chain LTC can comprise stages of its own. In a possible embodiment the logistic transport chain LTC is also integrated into the system according to the present invention.

Each asset of the resource conversion chain RCC and/or of the logistic transport chain LTC can comprise a gateway GW connected to the platform of the system according to the present invention to provide near real time data, in particular real time energy data.

As can be seen in the flow chart of Fig.1 in a first step S1 resource related data is provided by data records of the assets within the resource conversion chain RCC shown in Fig.2

In a preferred embodiment of the computer-implemented method a non-fungible energy token (ENTF) is generated automatically as soon as an incremental amount of energy E or other resource R is produced by an energy production or energy conversion asset of the resource conversion chain RCC and reported in near real time as energy related data by the energy production or conversion asset of the re-source conversion chain RCC.

The generated non-fungible energy token (ENTF) can be stored in a digital site wallet of the respective asset or asset owner.

The amount of energy or other resources can be measured by on site sensors of the respective asset to supply data to the respective gateway GW.

The data and/or the generated non-fungible energy token (ENTF) can be written into the last (still open) block B of a cryptographic block chain BC administered in a data-base DB of the system. As soon as the respective block B has been closed in response to an applied consensus mecha-nism such as proof of work (PoW) or proof of stake (PoS) the data written into the respective block becomes auto-matically immutable and cannot be changed.

In a further step S2 of the method shown in Fig.1 a compliance check is performed by a compliance check algorithm CCA executed on a compliance check unit CCU of the system to evaluate whether the resource related data provided by a record of an asset complies with machine interpretable requirements provided in a scheme as also illustrated in Fig.2
The scheme is provided by scheme holder. There can be different schemes for different energy types as also illustrated in the example of Fig.2.

In a possible embodiment a compliance check is performed automatically for each stage of the resource conversion chain RCC.

For the near real time data provided (e.g. every second or minute) by the gateway GW of the at least one electricity generation asset and stored immutable in the database DB of the system a compliance check is performed by a compli-ance check algorithm with requirements defined in an Elec-tricity Scheme.

For the near real time data provided by the gateway GW of the at least one hydrogen production asset a compliance check is performed automatically with the requirements de-fined in a Hydrogen(H2)-Scheme as shown in Fig.2.

For the near real time data provided by the gateway GW of the at least one methanol production asset a compliance check is performed automatically with requirements defined in an E-Fuel-Scheme as shown in Fig.2.

In a further Step S3 of the method illustrated in the flow chart of Fig.1 a non-fungible certificate token (CNFT) is generated as a digital renewable resource certificate if the compliance check of step S2 provides a positive evalu-ation result.

For instance a threshold value TH can be defined in an applied scheme that an electricity production asset is not allowed to generate more than 30g CO2-equivalent per 1 MWh of electrical energy. If the threshold value TH is exceed-ed no non-fungible certificate token (CNFT)is generated by the token generator of the system. In contrast if the measured and stored data indicates that the electrical en-ergy has been produced by the asset with less than 30g CO2 equivalent per 1 MWh a non-fungible certificate token (CNFT) is generated automatically by the token generator of the system.

The non-fungible certificate token (CNFT) generated as a digital renewable resource certificate comprises in a preferred embodiment a reference to its associated non-fungible energy token (ENTF). The generated non-fungible certificate token (CNFT) is stored in a digital wallet.

In a further step S4 of the method illustrated in the flow chart of Fig.1 the non-fungible certificate token (CNFT) is automatically devaluated by a devaluation unit of the system when the associated resource R such as energy E in a specific energy form (e.g. electricity eE or hydrogen hE) is consumed by a resource consumption asset and proof thereof is provided as data in electronic form to the de-valuation unit of the system.

The proof of resource consumption can be provided by a non-fungible resource token (RNFT) of the resource con-sumption asset and/or by the asset owner of the resource consumption asset.

The non-fungible certificate token (CNFT) generated in step S3 initially belongs to the asset owner and is stored in step S4 in the digital wallet of the asset owner.

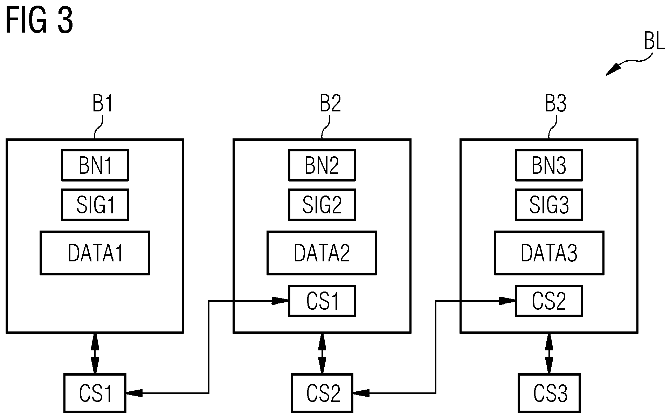

As illustrated in Fig.3 data provided by assets of the resource conversion chain RCC shown in Fig.2 is written in a preferred embodiment of the method in blocks B of a cryptographic block chain BC. The block chain BC comprises a first genesis block (block B1) and a number interlinked blocks.

Each block B can comprise a block number BN, a nonce, the data, its hash value (checksum CS) and the hash value of the preceding block B.

A block chain BC is a continuously extendable list of data records that are concatenated to one another by cryptographic methods. Each block B typically contains a cryptographically secure checksum CS of the preceding block, and also possibly a timestamp TS and further transaction data.

In the present exemplary embodiment, the block chain BC has a first data block B1 with a first data record and a second data block B2 with a second data record and also a third data block B3 with a third data record. In the course of conformity tracking, a first step comprises first producing the first data block B1, with which the block chain BC begins. Further steps comprise adding the second data block B2 with the second data record and also the third data block B3 with the third data record, and thus extending the block chain BC.

Each of the data blocks B1, B2, B3 has an assigned calculated checksum CS1, CS2, CS3, such as for example a hash value. For determining the checksum CS e.g. a SHA-256 algorithm (secure hash algorithm) can be used.

The respective data blocks B1, B2, B3 can have a block number BN1, BN2, BN3 representative of the respective po-sition of the block in the block chain BC. One or more digital signatures SIG 1, SIG 2, SIG3 are representative of validators. The blocks B1, B2, B3 comprise data DATA1, DATA2, DATA3 and blocks B2, B3 comprise for conformity tracking the respective checksum CS1, CS2 of the respec-tive preceding blocks B1, B2.

Thus, the first data block B1, since it is the first data block B1 of the block chain BC (also called genesis data block), does not have a checksum CS of a preceding block. The second data block B2 has the first checksum CS1 of the first data block B1 and the third data block B3 has the second checksum CS2 of the second data block B2.

It can also be the case that one of the data blocks B1, B2, B3 is in the form of a smart contract. Smart contracts are contracts on a software basis in which a wide variety of contract terms and conditions can be stored. During the course of the contract, certain linked actions (for exam-ple payments) can be performed independently when there is a corresponding trigger (for example fulfillment of con-tract terms and conditions).

In a possible embodiment the database DB (or the database system) can be for example a DLT based system (DLTS) or a cryptographic block chain BC and a data block can be a block B of the block chain BC or of the DLTS. A data block B can for example comprise details pertaining to the size (data size in bytes) of the data block, a data block head-er (block header), a transaction counter and one or more transactions.

The data block header can for example comprise a version, a concatenation checksum, a data block checksum CS, a timestamp TS, proof-of-work, a proof of stake or a proof of authority verification and a nonce (one-time value, random value or counter used for the proof-of-work verifi-cation).

A data block B can for example also be just a specific memory area or address area for the total data stored in the distributed database system/the network application. It is thus possible for example for block-less distributed database systems, such as for example the IoT chain (ITC), IOTA and Byteball, to be realized. These involve in par-ticular the functionalities of the blocks B of a block chain BC and of the transactions being combined with one another such that for example the transactions themselves protect the sequence or chain of transactions (of the dis-tributed database system/the network application)(that is to say store them in a security-protected fashion, in par-ticular).

To this end, for example a concatenation checksum can be used to concatenate the transactions themselves with one another in that a separate checksum or the transaction checksum of one or more transactions is used as the con-catenation checksum, which is stored in the corresponding new transaction as well when a new transaction is stored in the distributed database system/the network applica-tion. In such an embodiment, a data block B can for exam-ple also comprise one or more transactions, wherein, in the simplest case, for example one data block corresponds to one transaction.

Within the context of embodiments of the method and system , a "block chain node", "node", "node of a distributed database system/the network application" can comprise a device. These devices can for example comprise field devic-es, cell phones, computers, smartphones, clients or sub-scribers that perform operations for (with) the distribut-ed database system/the network application (for example a block chain BC). Such nodes can for example perform trans-actions of a distributed database system/a network appli-cation or the data blocks thereof or insert or concatenate new data blocks B with new transactions into the distrib-uted database system/the network application by new data blocks.

In particular, this validation and/or concatenation can be performed by a trusted node (for example a mining node) or solely by trusted nodes. A trusted node is for example a node that has additional security measures (for example firewalls, access restrictions to the node or the like) in order to prevent manipulation of the node. Alternatively or additionally, a trusted node can for example store a node checksum (for example a digital signature or a cer-tificate) in a new data block when the new data block is concatenated with the distributed database system/the net-work application.

It is thus possible in particular to provide evidence indicating that the corresponding data block B has been inserted by a specific node or indicating its origin. The devices (for example the corresponding device) are for example devices of a technical system and/or industrial plant and/or of an automation network and/or of a produc-tion installation that are in particular also a node of the distributed database system/the network application.

The devices in this instance can be for example field devices or devices in the Internet of Things IoT that are in particular also a node of the distributed database system/the network application. Nodes can for example also comprise at least one processor, for example in order to perform their computer-implemented functionality.

Within the context of embodiments of the method and system according to the present invention, a "concatenation checksum" CS can be understood as meaning a checksum that in particular indicates or references the preceding data block of the distributed database system (or of the net-work application)for a respective data block of the dis-tributed database system (or of the network application) (frequently referred to in specialist literature in par-ticular as "previous block hash").

This in particular involves an applicable concatenation checksum CS being formed for the corresponding preceding data block. A transaction checksum or the data block checksum of a data block B (that is to say an existing da-ta block of the distributed database system or of the net-work application) can be used for example as the concate-nation checksum, in order to concatenate a new data block with an (existing) data block of the distributed database system (or of the network application).

It is however also possible for example for a checksum CS to be formed on the basis of a header of the preceding da-ta block or on the basis of all of the preceding data block and used as concatenation checksum. This can for ex-ample also be calculated for multiple or all preceding da-ta blocks. It is for example also feasible for the concat-enation checksum CS to be formed on the basis of the head-er of a data block and the data block checksum. However, a respective data block B of the distributed database system (or of the network application) advantageously comprises a respective concatenation checksum CS that was calculated for or relates to a preceding data block, in particular even more advantageously the directly preceding data block, of the respective data block B.

It is for example also possible for a corresponding concatenation checksum CS to be also formed only on the basis of a part of the corresponding data block B (for example preceding data block). This allows for example a data block that comprises an integrity-protected part and an unprotected part to be realized. This allows for example a data block B whose integrity-protected part is invariable and whose unprotected part can also still be altered later to be realized. Integrity-protected is intended to be un-derstood here as meaning in particular that an alteration of integrity-protected data can be established by a check-sum.

In a possible embodiment the system provides accounts for energy and resource producers, their sites and assets. The system further provides accounts for energy and resource consumers, their sites and assets. The system can also provide accounts for certification bodies. The system can also provide accounts for scheme holders to maintain their schemes. The system enables approvals for enabling certification.

The system can connect to machine signals, provided by meters or automation/control entities via gateways GW of the different involved assets.

The energy related data recorded in the non-fungible ener-gy token (ENTF) is checked in step S2 of the computer-implemented method shown in the flow chart of Fig.1 by a compliance check algorithm CCA against machine interpreta-ble scheme requirements of a scheme provided by a scheme holder to generate automatically in step S3 of the comput-er-implemented method an associated non-fungible certifi-cate token (CNFT)if the compliance check performed in step S2 provides a positive evaluation result.

The applied scheme can comprise in a possible embodiment of the computer-implemented method a scheme of an energy type. In a possible embodiment a scheme holder may hold more than one scheme. In a possible implementation the scheme holder can offer suitable schemes applicable for compliance checks. An offered scheme can be selected by the asset owner. The asset owner can have a contract with a certification body that does audit his asset against the selected scheme. The certification body must therefore be entitled to assess this scheme. The entitlement is given to the certification body by the scheme holder.

The method and system can produce incremental records (energy non-fungible tokens or ENFTs) per asset. The incremental record can be configured per product, so that amounts of energy or single products can be configured. This enables on-time compliance check that can be executed in step S2 depending on production instead of a fixed re-porting time period.

Each record can provide data, such as the energy origin, upper or lower caloric energy amount, time of production or devaluation, properties of the energy producing asset, other. The provided data are evaluated in step S2 automat-ically against a set of machine interpretable require-ments.

The system provides sets of applicable digital require-ments called schemes, which represent e.g. a set of legal or voluntary or self-declared machine interpretable requirements that can be checked continuously in step S2 against the incremental energy records.

The system can - in case of positive evaluation results-produce in step S3 automatically certificates CNFTs (non-fungible certificate token), each with a 1:1 link to the associated non-fungible resource token (RNFT), in par-ticular to an associated non-fungible energy token ENFT.

An energy certification service can be provided to track the environmental impact of the entire production process. It covers a variety of certification schemes for renewable and low-carbon electricity, hydrogen, e-fuels, and other energy carriers as well as for resources, such as carbon dioxide.

Additionally, the certification system connects physical assets to a distributed ledger technology (DLT of infrastructure. The implemented DLT system provides for the certificate's verification, interoperability, tamper-proof authentication, and portability across the different industrial sectors.

Once qualified the digital certificate or token is issued instantly, automatically, and in accordance with legal or market requirements.

All relevant information needed to prove a sustainable origin and carbon footprint of a green or low-carbon prod-uct is included in the digital certificate.

The digital energy certificates, i.e. the generated non-fungible certificate token (CNFT) ensure traceability of the carbon footprint of energy products, energy imports, and energy consumption. It provides proof of the reduced carbon intensity. The system serves as a trusted and transparent certification platform for the entire resource conversion chain RCC. Therefore it can support different types of certification schemes in alliance with well-known international scheme holders such as ISCC or TÜV.

Accredited certification bodies are entitled to assess those certification schemes.

The traditional plant audits (initial and repetitive) can be enhanced by the system, taking real-time production da-ta into account. As before, the standard audit covers the requirements that can only be checked by humans. In addition, a selection of digitally available signals can be used to enable continuous monitoring of compliance.

For monitoring of compliance relevant real-time data, a communication interface to the relevant plant instrumentation is implemented, i.e. a gateway GW).

By the time the energy production asset within the conversion chain is set "in operation" inside the system, real-time energy data can be continuously stored inside an non-fungible energy token (ENTF). Each non-fungible energy to-ken (ENTF) represents a configurable portion of certifia-ble energy, e.g. 1kg hydrogen. The non-fungible energy to-ken (ENTF) records energy data which needs to be checked by the compliance algorithm against assigned scheme re-quirements (e.g. CMS 70: CO2equivalent threshold).

As soon as the general compliance is confirmed and the as-set is set to "certified" by a certification body inside the system, incremental certificates are issued as non-fungible certificate tokens (CNFTs) inside the digital wallet of the commercial operator.

To protect the system from green-washing, the system according to the present invention does not support "book-and-claim" principles, but supports "mass-balancing". To achieve this, the transfer of digital certificates can in a possible embodiment of the method and system only be ex-ecuted, if an underlying Power Purchase Agreement (PPA) is confirmed. The signatures of both parties (e.g. economic operator of electricity generation asset and electricity consumer) are recorded inside the system, so that audits can be performed at any later point in time.

Each transfer of a digital certificate is configurable according to a given power purchase agreement PPA if both parties, producer and consumer are registered inside the system. The system can for example also reflect the valid-ity of a contract between an electricity producer and a hydrogen producer, so that during the configured time the digital certificates can be exchanged automatically be-tween the configured digital wallets of the respective as-set owners.

The devaluation of digital certificates in step S4 of the method illustrated in the flow chart of Fig.1 can be performed according to a metered energy consumption or, if no consumption has taken place, by expiration. Expiration of digital certificates can be defined by the certification scheme and does happen automatically inside the system.

Following the resource conversion chain RCC shown in Fig.2 , the devaluation of energy certificates is used to report a compliant use of clean energy for the succeeding stages of the resource conversion chain RCC.

In addition to the creation, transfer and devaluation process, each economic operator can be responsible for reporting of clean energy production and cancellation of electricity certificates to an official registry. This is useful to avoid double counting and fraud.

An organization inside the system is a legal entity that provides information to or consumes information from the system. An organization comprises at least one user. The initial user registers the organization in onboarding activities.

There are different roles that organizations can have within the system:
- asset owner - legal owner of an asset
- asset operator (a company that operates the plant on behalf of an asset owning company)
- asset operator - Producer (e.g. wind park operator)
- asset operator - ProSumer (e.g. electrolyzer opera-tor)
- asset operator - Consumer (e.g. logistician consuming efuels)
- Implementation Service Provider - company that implements the gateway to connect assets to the system
- Auditor (notified body) - company entitled to state compliance according to an applied scheme
- System Operator - company providing support (certification expert) and software maintenance for the sys-tem
- Cloud Operator - company providing computing services in the cloud
- governmental authority

The system supports the configuration of users. A user is a person which is entitled by an organization to act in-side the system. An organization can have several users.

Users are assigned to organizations. A user without assignment to an organization may only exist for an initial user. The initial user is enforced to configure the respective organization.

Users are usually human individuals that interact via user interface with the system. Users are described with a user profile including a user name and a user e-mail account. In addition a user can have certificates and passwords.

A user may also be a non-human entity, that is capable of interacting e.g. via API with the system. Such an entity is always assigned to an organization, so that any harm can be linked to an organization.

Following organizational roles are provided within the system:
- System operator - operates the system
- Asset operator (Commercial Operator) - produces, consumes resources, in particular energy
- Scheme holder - does care for the definition of schemes
- Certification body - audits an individual asset operating organization including their assets

Depending on the organizational role, different user interface views and interactions are available inside the system.

Organizations of different roles can interact for the purpose of energy certification. For example an asset operat-ing company of a site selects an auditing organization. This selection enables the user of that auditing organiza-tion to get access to the data of the operating organiza-tion. The auditing organization may then also be entitled to activate or deactivate the continuous certification.

Digital wallets are used in the system to store value in a secure way. The digital wallets are equipped with keys. Keys can also be used for signatures.

Depending on the organization role the digital wallet may have different purposes. For example for an asset opera-tor, each site can comprise its own digital wallet. The digital site wallets can be used to collect the non-fungible resource token (RNFT), in particular the non-fungible energy token (ENFT), and the non-fungible certif-icate token (CNFT). The keys are used for signature of transfers as well.

For a certification body, the digital wallet does provide the keys for certification.

In general, the token type applied by system is non-fungible (NFT) and has a unique identifier.

Each token comprises recorded data that is immutable when minted. Each token has an owner. This is achieved by assignment to a digital wallet. Each token can be trans-ferred by configurable transfers from one digital wallet to another digital wallet. The token stores data, accord-ing to certification requirements.

Non-fungible tokens (NFTs) are useful in providing securi-ty. Information stored on an immutable cryptographic block chain cannot be accessed, stolen, or used by anyone that does not have the fitting keys.

A non-fungible token (NFT) is unique and irreplaceable, making it impossible for one non-fungible token to be "equal" to another. Non-fungible tokens (NFTs) are digital representations of entities and have been likened to digi-tal passports because each token contains a unique, nontransferable identity to distinguish it from other tokens. Non-fungible tokens are also extensible, meaning that one can combine one NFT with another NFT to create a third, unique NFT.

The system makes use of non-fungible resource tokens (RNFTs), in particular of non-fungible energy tokens (ENTFs), and of non-fungible certificate tokens (CNFTs). The non-fungible Energy token (ENFT) documents an incre-mental amount of energy with immutable and configurable data. The non-fungible Certificate token (CNFT) documents the compliance to schemes that derive from e.g. voluntary declarations. In general a non-fungible resource token (RNFT) can document a (measured) incremental amount of a resource R , in particular environment relevant resource, being produced, stored or consumed within the resource conversion chain RCC. The environment relevant resources comprise inter alia energy, raw and intermediary materi-als, gas emissions and water resources.

Energy producing and energy consuming companies within the resource conversion chain RCC comprise one or many sites.

Each site of an energy producing or energy consuming com-pany comprises associated site information, such as site name, address and location (coordinates), that identifies the respective site. Each site can have one or many as-sets. Each site is owned by an organization.

The asset provided at a site comprises a technical entity that is adapted to produce, consume, process, store or to convert a resource such as energy. Each asset is owned by an organization. The asset may be operated by an addition-al entitled organization.

Each asset has a name and a verifiable asset identifier. Each asset can have associated additional information. Such information can be requested by certification schemes, so that the system can check them in step S2 of the method regarding compliance.

An asset can be created, read, updated and removed within the system. The asset does represent a physical entity. Each asset is part of exactly one site. Each asset can comprise at least one energy output meter which is used for tokenization.

Assets can have several balance meters to enable green house gas (GHG) calculation. Each meter can be recorded as a counter (e.g. MWh) or flow (MW) signal. Flow values can be totalized. Each meter can comprise a quality signal, to reveal a temporary malfunction in the system.

Several assets per site can be configured. An asset type can e.g. be chosen from a list. This may change the unit of a capacity field next to asset type and restrict the energy type of tokenization meter to provide relevant en-tries.

An installed capacity (e.g., kg/h for hydrogen) of the as-set can be set. The installed capacity can be used in a dashboard for a site capacity overview.

Further in a possible embodiment location GPS values for the assets and sites can be supported.

During configuration a date of first operation can be set. The date of first operation is the date on which the installation of the asset becomes operational. This is relevant for certification requirements and can be used e.g., downstream by energy consumers.

In a possible embodiment tokenization can be activated or deactivated for an asset. This setting enables or disables data transfer to the cloud system. A deactivated asset does not send data tokenization data. This can be used during times of repair or calibration of the connected me-ters.

A certification body can be selected during configuration e.g. from a dropdown list. If a certification body is selected, it gets access to the asset configuration set-tings.

A certification status can show a current approval state. If the certification body has checked the settings, it can set the asset from an initial certification status to an approved certification status, which enables the genera-tion of digital certificates. This status can also be re-voked by the certification body.

Energy data is of static or dynamic nature. For incremen-tal clean energy certification both is supported by the system.

Dynamic energy information requires online digital asset communication whereas more static information can be man-aged also by humans, e.g. representatives of asset owner or auditor. In case human data relevant for certification is entered, a validation signature by an author and vali-dation by a notified body may be applied. Information is exchanged via digital communication and interfaces where applicable.

Energy commercialization depends on energy type and na-tional regulations. Power purchase agreements (PPA) are used for long-term trading.

For certification of electrical energy with the system, power purchase agreements (PPAs) are considered. Further online trading contracts can be taken into account. There-fore an interface that supports fast communication is im-plemented.

Power purchase agreements PPAs or other Resource Purchase Agreements RPAs range typically over years. They are essential for financing power plants and play a major role for de-carbonization. Power purchase agreements are closed between mid and large energy producers and utilities or companies. Power purchase agreements are mostly managed outside of the system. An energy contract is achieved via several commercial states (request, offer, order, order confirmation) before energy is delivered and payed.

The system requires verifiable proof of an existing con-tract with digital identity of energy provider and energy consumer, amount of energy and agreed guarantee of origin (GO).

The accountability and the liability of information stored in non-fungible energy token (ENTF) or other non-fungible resource tokens (RNFTs) resides within the asset owner organization.

Each type of resource, in particular energy, has different stages or states that are required for certification. Each resource is produced, transferred, stored and finally consumed.

The non-fungible energy token (ENTF) is minted as soon as the incremental amount of energy is produced (= reported by the measurement data) in a specific energy form (e.g. electrical energy eE or chemical energy in the form of hy-drogen hE).

In a possible non-fungible energy tokens (ENTF) are minted for different energy forms. For instance an eENFT can be minted for a sufficient amount of produced electrical en-ergy eE and a hENFT can be minted for a sufficient amount of produced hydrogen energy hE. Each minted ENTF comprises an associated (linked) generated non-fungible certificate token CNFT if the production of the respective resource R such as electrical energy (eE) or hydrogen energy (hE) fulfills the compliance requirements for production de-fined in the applied scheme and checked by the compliance check algorithm CCA.

Non-fungible tokens (NFTs) are created through a process called minting, in which the information of the NFT is recorded on a block chain. At a high level, the minting process entails a new block B being created, the NFT information being validated by a validator, and the block B being closed.

The minting process may entail the incorporation of smart contracts that assign ownership and manage the transferability of the non-fungible token NFT. A minted non-fungible resource token (RNTF) is in initially owned by the resource asset operating company.

The minted non-fungible energy token (ENTF) is in initial-ly owned by the energy asset operating company. The asso-ciated non-fungible certificate token CNFT can then be transferred, stored and consumed.

Energy data associated with energy that is physically transported from a producer to consumer may be transferred and devaluated according to contracts and proven consump-tion data.

Energy as a resource is available in different energy types comprising:
- electrical energy chemical energy
- gas, e.g. Hydrogen, Ammonia
- fuel, e.g. e-fuels
- solid, biomass, ammonium nitrate

Each type of energy can be tracked in increments, e.g. 1 MWh, 1 kWh, 1MJ, 1 kg, 1 m³.

Each energy increment is auditable, for example with data stored in a token.

A non-fungible energy token (ENTF) as used in the system can be adapted to store inter alia the following infor-mation:
- NFT-ID
- BC (Block Chain) Agent ID
- Asset ID
- Tokenization Meter/Signal ID Energy type
- Token size
- Timestamp begin
- Timestamp end
- Token quality (good or bad)
- Total CO2eq per token
- MJ Energy (for RFNBOs)

The energy token data enables to trace back to related information, such as, address of commercial operator, pro-ducer of consumed energy, (e.g. windfarm electricity), lo-cation of site, meter data, gauging certificates and so on.

Each energy increment can comprise state specific information, in particular:
- plant owner/operator
- plant auditor/notified body
- energy predecessor of the energy (e.g. Windfarm electricity)
- time properties such as production time, transfer time, storage time, consumption time
- locations assigned, e.g. location of production, transfer locations, storage locations, consumption location
- meter data, provided by a (gauged) energy meter, e.g. meter identity, meter accuracy and gauging certifi-cate
- signal data with signal name, signal designation, value, unit, flow direction, time stamp, quality pa-rameters such as purity and CO2 footprint, communica-tion quality (good, bad, uncertain)
- end-to-end trustworthiness including signature and/or encryption

In case the energy is fed into a grid (electricity, gas, fuel), the consumed energy is physically not identical. The system is not able to detect the physical flow, but can assure a proper balance of the grid's in- and output for the certified energy.

If the owner of a non-fungible energy token (ENTF) with-draws from the systems, his energy data can still be as-signed to a system wallet. This allows to perform later audits. A token cannot be removed from the system.

Incremental energy data builds a continuous time sequence or time series data (data stream) without overlap for a given energy flow. In case of missing data, there is a configurable substitute value and a corresponding status (substitute) available. Substitute values need to be marked for audits.

The configuration of a tokenization meter is required to enable incremental energy certification.

According to the configuration the system does continuous-ly generate non-fungible resource tokens (RNFTs) for pro-duced resources R such as energy E in an energy form, i.e. non-fungible energy tokens (ENTFs). The non-fungible ener-gy token (ENTF) is an immutable record of the energy E produced. With each non-fungible energy token (ENTF) re-quired data is persisted in the cloud system, e.g., to cover the mass balancing criteria.

Additional data recorded, such as timestamps TS of production or greenhouse gas balance CO2 equivalent and energy amount is used by the method and system to verify a tem-poral correlation or violation of a greenhouse gas removal threshold.

Only a scheme compliant non-fungible energy token ENFT does enable the generation of a corresponding non-fungible certificate token CNFT.

A certification scheme can in a possible implementation of the system be selected from a drop-down menu of applied schemes. The dropdown menu shows the system supported schemes.

The energy type or energy form can be preselected, accord-ing to the asset type selection.

The token size value (e.g., 1, 10, 100) and unit can also be set. The unit can be selected from a dropdown list. On-ly units relevant for the energy type can be selected (e.g., kWh, MWh for electricity).

Energy other than electricity requires specification of amount of energy per token. The unit of the energy is MJ. In case of energy the value is calculated by a processor of the system.

In case of hydrogen H2 or e-fuels, a lower caloric value can be specified.

To support greenhouse gas balancing, a fixed CO2 equiva-lent value per each non-fungible energy token (ENTF) can be specified with kg or g units. A fixed CO2 equivalent value divided by the energy amount per token can be used for comparison with scheme requirements to detect the vio-lation of a set threshold.

The configuration of one or several balance meters sup-ports additional features:
- Online tracking (of e.g. the energy amount for processing)
- Devaluation of received clean energy certificates received from upstream energy providers (e.g. electricity or hydrogen energy providers)

For a maximum of connectivity, the system can support different field level protocols for meter communication such as Modbus TCP and OPC UA.

The signal configuration provides sufficient name space fields to configure transparent and unique identifiers of the signals. For auditing purposes it is possible to use the same signal identifiers in conventional audit docu-ments as well as signal configuration.

The data fields can match those used by an existing distributed control system. The data fields can be used for any kind of reference designation system (e.g. tagging system).

A configuration dialog can in a possible embodiment of the method support specification of two signals per meter, i.e. a value signal and a quality signal.

The value signal is used to track the energy or mass flow. The quality signal is used to track the quality of the value signal. This allows the source of the value signal (meter or control system) to send an additional quality value which blocks generation of a non-fungible certificate token (CNFT) from an a non-fungible energy token (ENTF) due to a meter fault or due to another reason.

If the quality signal changes from a "good" state to a "bad" state, then certificates cannot be generated. The quality status can be tracked continuously. If a bad qual-ity is detected even for a short time during data collec-tion, then the current non-fungible energy token (ENTF) comprises a bad status which excludes this non-fungible energy token (ENTF) from receiving a non-fungible certifi-cate token (CNFT).

A signal definition of the energy value signal with tag, designation, item, signal designation, signal name, measurement range and unit can be set to provide a clear and transparent set of information that gives reference to the conventional audit documentation.

The system can track the flow value with a fixed sample rate and calculate a counter value. The counter value can be used to issue a token according to a token size set-ting. The time base setting can be derived from unit of measurement selection (e.g., kg/h → time base = hour).

In addition, a unit divisor can be specified (e.g., input signal = kg/h, if tons shall be certified, then divisor can be set to 1000 to achieve tons/h).

Flow values have limited precision if the sample rate is low and signals are volatile.

If a totalized value is selected, then this more precise value is available to issue a token according to a token size setting. The system expects integer values. Totalized signals have meter precision and are preferred signals.

However, a reset of a meter or control system must be handled in combination with the system, so that no loss of digital certificates occurs.

The quality signal is used to avoid issuing digital certificates in case of malfunction. The quality of the sys-tem by default is of status "bad". Only "good" signal quality does enable issuing digital certificates.

Data privacy is required for personal data. In addition, data might need protection due to intellectual property (e.g. production data). Therefore, the energy increment data is not transferred and kept in the digital wallet of the commercial operator. Encryption and access control to data is supported where applicable.

The back-tracing of energy along the resource conversion chain is only permitted for authorized users. The system gives access to full traceability only to administrators of node operators. This can be requested in case of spe-cial audits. Back-tracing on user level is possible for commercial operators with the transfer information.

There is asset specific information required for evalua-tion of compliance to a given scheme. Such information that is not part of publically available certificates is only visible to the assigned certification body.

Schemes are machine-readable representations of real world specifications and regulations. The schemes are used to evaluate and confirm compliance to these specifications and regulations inside the system. Schemes can be created according to scheme holder definitions. They can be re-vised and discarded. The applied scheme can comprise in a possible embodiment a scheme associated with a specific an energy type.

Each asset owner has to comply with the scheme defined in his energy contract. If the asset owner is using the sys-tem to digitally comply with the chosen schemes, the asset owner must let a notified body audit his asset according-ly.

For each scheme supported by the system, a regulatory body (e.g. CMS 70 TÜV) can entitle an auditor to perform the local site audit and confirm the compliance inside the system. Therefore only auditors that are available in the system can be chosen by an asset owner.

Published schemes in general provide the following information:
- Scheme metadata, e.g. Scheme title, scheme holder, revision, validity
- Scope of application
- Communication restrictions
- Requirements regarding certification process
- Requirements regarding certificate holder
- Requirements regarding energy

As part of the scheme a conformity or compliance check algorithm is used. The compliance check algorithm CCA is applied to an asset energy output and creates a non-fungible certificate token (CNFT) if the energy input, the energy output and the asset specific parameters comply with the scheme requirements.

The system does record conformity in incremental clean energy certificates. The certificate lists the applicable energy and scheme data accordingly.

The applied compliance check algorithm CCA can be docu-mented and logged for later audits. The applied compliance algorithm documentation may be part of the certificate or just be available via the portal of the system.

For each energy type produced by an asset a scheme can be created, read, updated and discarded. There can be regulatory, voluntary and self-declared schemes.

Voluntary schemes for regulated market are introduced by independent scheme holders (e.g., ISCC, REDcert, RSB), who are officially recognized by the competent authority (e.g. by the EU Commission. The requirements of the voluntary scheme can be managed inside the system in a library that is continuously updated according to real world stipula-tions. Therefore, the system operator may install a certi-fication expert. The schemes can be validated and signed by the regulatory body. In a preferred embodiment the schemes are published in machine readable format by the scheme holders.

Voluntary schemes or standards for voluntary markets can be introduced by scheme holders (e.g. TÜV SÜD for CMS 70, ISCC for ISCC Plus) without official recognition by a governmental authority.

As a certificate with little effort a self-declaration may exist, that an energy producer can configure and sign. Such a self-declaration does not require an audit by 3rd party. It provides a traceability inside the system better than existing solutions but not on the level of voluntary or regulatory schemes.

Digital Clean Energy Certificates can have different states.

Digital Clean Energy Certificates can be issued, trans-ferred and devaluated. Certificate transfers between asset owners are also illustrated schematically in Fig.2.

A digital certificate, i.e. a CNFT, is issued, if the en-ergy increment or other resource increment is produced, at least compliance to a scheme is confirmed and compliance of the asset is stated by the auditor. The owner of each new digital certificate is the resource producer, in par-ticular the energy producer.

In a possible embodiment a transfer of digital certifi-cates as shown in Fig.2 can only be performed on the basis of an existing signed power purchase agreement PPA or oth-er resource purchase agreement RPA. This transfer is per-formed automatically. If more than one power purchase agreement PPA exists for a given type of energy, the sys-tem provides means to configure transfers of digital cer-tificates accordingly, e.g. proportional transfer.

To support a trusted mass balancing of renewable energy, associated digital certificates (CNFTs) can be transferred from a producer to a consumer. A certificate page may show certificate transfers separately for the sent and received digital certificates in a table. The view can be switched accordingly. To start a transfer, a certificate transfer needs to be configured.

The configuration of a certificate transfer (CNFT-transfer) can require the specification of the following data fields:
- Hash reference
- Producer
- Consumer
- Certificate transfer type
- Validity of transfer

The power purchase agreement (PPA) hash reference is the fingerprint of the externally signed contract between an energy producer and an energy consumer. The hash is re-quired for audits to prove, that the certificate has been handed over to the consumer based on an existing signed energy/power purchase agreement PPA according to mass bal-ancing principle.

The system can automatically fill in the organization and digital wallet of the producer. The site and asset need to be selected to define the producer wallet. The organiza-tion and site need to be selected to assign the consumer wallet of the consumer for the transfer.

The pay-as-produced type as a certificate transfer type of the transfer does push automatically all digital certificates (CNFs) produced to the consumer wallet. The speci-fied start and end date and time can be considered for pushing digital certificates.

A user may save and send the certificate transfer, which can be tracked in the block chain database. After sending, the consumer can see the transfer in his transfer page. The consumer can then check the provided certificate transfer (CNFT-transfer) and accept it. As a consequence the producer of the energy E or other resource R can see the new signed status of the certificate transfer. Final-ly, the producer of the resource R such as power or energy E needs to activate the transfer of certificates. The au-tomatic transfer does then forward all certificates CNFTs accordingly.

A digital certificate CNFT can be devaluated automatically in step S4 of the method illustrated in the flow chart of Fig.1 by a devaluation unit of the system as illustrated schematically in the flow chart of Fig.2 if the owner is entitled to do this or the energy E or other resource R is consumed and proof therefore is provided by the energy consumer or other resource consumer to the devaluation unit. Clean energy certificates exist inside the system and can be shown and reported externally.

A digital certificate is a compilation of trusted and verified data including in a possible embodiment:
- issuer, e.g. certification authority CA or trust cen-ter
- owner, who holds the digital certificate
- assigned power purchase agreement (PPA)
- production asset
- location of production asset
- a timely validity
- list of compliant schemes (regulatory and voluntary)
- applied conformity algorithm
- predecessor of the resource such as energy (e.g. Windfarm electricity as predecessor for hydrogen).

This information may be part of the published information or, as an alternative be only provided in the online por-tal with the help of the system.

Each certificate is digitally signed and can be validated at any time after issuance. Therefore a machine readable identifier can be available (e.g. QR-code). Each digital certificate or a sum value can be published for visualization on external websites per producer or consumer.

If a party wants to archive energy certificates (ENFTs) or other resource certificates (RNFTs) outside of the system, it can export the certificates e.g. as pdf-files (A- Type for long term archiving). This export may support signed pdf-files. Each digital certificate can be monitored and logged regarding its use.

The system does provide in a possible embodiment a user interface that supports asset owner transactions, such as
- asset interface configuration and trouble shooting (technical expert)
- configuration and activation of voluntary schemes (technical expert)
- monitoring and reporting (commercial manager)
- contract configuration (commercial manager)
- support request

The system does provide in a possible embodiment an operation and maintenance interface that enables following transactions:
- logging and monitoring of system warnings and alerts
- anomaly detection and troubleshooting of asset interface communication
- configuration of schemes for approval by certifica-tion authorities.

The system can provide in a possible embodiment a public portal that enables online checks by anonymous users.

Each user equipped with a certificate identifier (e.g. QR-code) is able to read corresponding information.

In addition the portal can provide the following features for transparency:
- a source code of the smart contracts and hash
- statistics regarding certification
- organization and asset data compliant to privacy terms and conditions

The system provides in a possible embodiment a certifica-tion authority portal that supports:
- the configuration, validation and approval of schemes
- the access to assigned organizations and their asset data
- configuration and signature of the asset conformity algorithm deactivation and activation of conformity for a specific asset overview dashboard and reporting
- REST-API for data management

The CNFT provides additional certification information, such as applied scheme, scheme version and certification body.

With the method and system of the present invention the worldwide energy processing and conversion chains can be digitally managed and compliance can be locally reported. Instead of long monitoring periods with manual tasks, digital on-time certification can be executed. Digital certificates can be immediately produced and handed over to a consumer. The producer and consumer can directly report a compliance without intermediaries (e.g. a grid operator). The mass-balancing principle can be proven due to configu-ration and signature on certificate transfers. Registries can be synchronized to act as supervisor. Registries can be released from performance consuming real-time data pro-cessing.

The system provides an enhanced clean energy certificate utilization.

The system according to the present invention does support in a preferred embodiment the automatic devaluation of the consumed clean energy to provide:
- precise allocation to the relevant product or good
- maximizing utilization of renewable quality and
- monitizing of unused certificates
- exploitation of GHG removal quality

The system can support in a possible embodiment different ways of certificate transfer, in particular a Pay-as-produced transfer and a Pay-per-use transfer.

In a Pay-as-produced certificate transfer all digital certificates minted by an asset/meter are pushed to one or several consumers (split range).

In a Pay-per-use certificate transfer only required certificates are pulled from contracted producer or trader wallets on demand.

The system comprises in a possible embodiment a devalua-tion optimizer. The devaluation optimizer of the system can perform several sub-steps.

Initially metered demand is collected precisely until the token size for a new resource NFT (RNFT), in particular a new energy NFT (E-NFT) for the resource energy E in a spe-cific energy form (e.g. hydrogen) is completed.

The demand is then covered with what is left over from a previously devaluated non-fungible certificate token (CNFT) token (e.g. associated with the resource electrici-ty or electrical energy eE).

In a Pay-as-produced transfer all contracted suppliers have delivered a token with required last time slot.

In a Pay-per-use transfer all digital wallets with option to pull from have been checked.

The check can consider a waiting time, to ensure, that all contracted plants have delivered a non-fungible resource consumption token (RNFT) for optimized devaluation of the non-fungible certificate token (CNFT) stored in the digi-tal wallet of the asset owner by a devaluation unit of the system in step S4 of the method according to the first as-pect of the present invention.

A received (e.g. electricity) non-fungible certificate to-ken (CNFT) with a split time slot can be used as an indi-cator to await the next non-fungible certificate token (CNFT) for completion.

A maximum waiting time shall not be exceeded (configura-ble) to enable a fast availability of new produced (e.g. hydrogen) certificates.

All combinations of non-fungible certificate tokens (CNFTs) to satisfy the left demand can be checked, so that a minimum of tokens is devaluated in step S4 by the deval-uation unit and the supplier contract is met for energy capacity and/or CO2eq threshold optimization.

Left over non-fungible certificate tokens (CNFTs) can stay in the digital wallet for e.g. further monetization.
Pay-as-produced: transfer by consumer
Pay-per-use (pay per consumption): further selling by producer

Unused digital certificates can expire according to ap-plied regulations.

The system provides an automated and efficient devaluation of digital certificates CNFTs used for a resource conver-sion chain (RCC). A consumer can source individual best fitting certificates from several producers. A consumer (pull mode) or a producer (push mode) can collect surplus digital certificates for transfer to other registries (book & claim) for monetization. Digital certificates as-sociated with little or no energy are avoided in the sys-tem. Billing can be based on optimized utilization of green electricity.

In a possible exemplary implementation of the system according to the present invention comprises an electrolyzer (adapted to generate hydrogen h (H2) from water (H2O) and supplied electrical energy eE)having a tokenization meter to increment hydrogen h and having a balance meter for electricity consumption metering a "token-time stamp"-devaluation can be selected for time periods being longer than a predefined time period such as a calendar week or a calendar month.

If a non-fungible hydrogen energy token hENFT is created, a start time stamp TS1 and an end timestamp TS2 can be checked with respect to an observed calendar month.

If both the start time stamp TS1 and end time stamp TS2 are within the same calendar month, then the system does search within its digital site wallet for an associated non-fungible certificate token CNFT of the selected scheme type and of the same calendar month and does devaluate (in step S4) automatically the oldest certificate token CNFT token CNFT available until the required amount of the as-sociated resource R is covered. If a left over part from another non-fungible certificate token CNFT exists and the left over part from the other non-fungible certificate to-ken CNFT is of the same calendar month, then this CNFT can be used for devaluation.

In contrast if the start time stamp TS1 and end time stamp TS2 are spread over more than one month, then the system can split by interpolation the consumed amount of elec-tricity eE into separate calendar month portions. Each portion can then be used for devaluation.

The system can register the devaluated non-fungible certificate token CNFT with its token ID, timestamp TS and amount of electricity eE devaluated in the block-chain BC.

The system can report in a declaration message or declaration document file the devaluated non-fungible certificate token CNFT of each source (organization, site, asset), along with the token ID, the timestamp TS of the token, the total energy and the amount of partially devaluated energy.

In contrast to a token time stamp devaluation as described above a load pattern-devaluation can be applied in a possible exemplary embodiment for time periods being shorter than a predefined time period such as a calendar week or a calendar month.

Given for instance an electrolyzer, that has a tokeniza-tion meter to increment hydrogen (H2) h and a balance me-ter for electricity consumption metering a "load-pattern"-devaluation can be selected which applies temporal corre-lation. The temporal correlation can for instance comprise an hourly correlation or a monthly correlation depending on the use case and/or depending on the involved resources R.

The system can register the devaluated non-fungible certificate token CNFT with its token ID, timestamp TS and amount of electricity devaluated in the block-chain BC. The system can report in a declaration message or declara-tion document file the devaluated token of each source (organization, site, asset), with the token ID, the timestamp TS of the token, the total energy and the amount of partially devaluated energy.

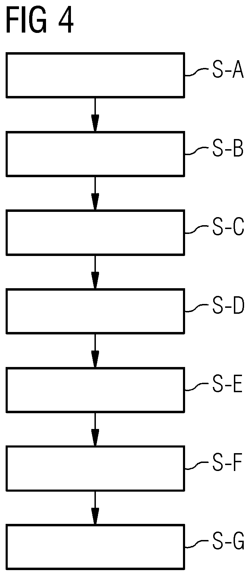

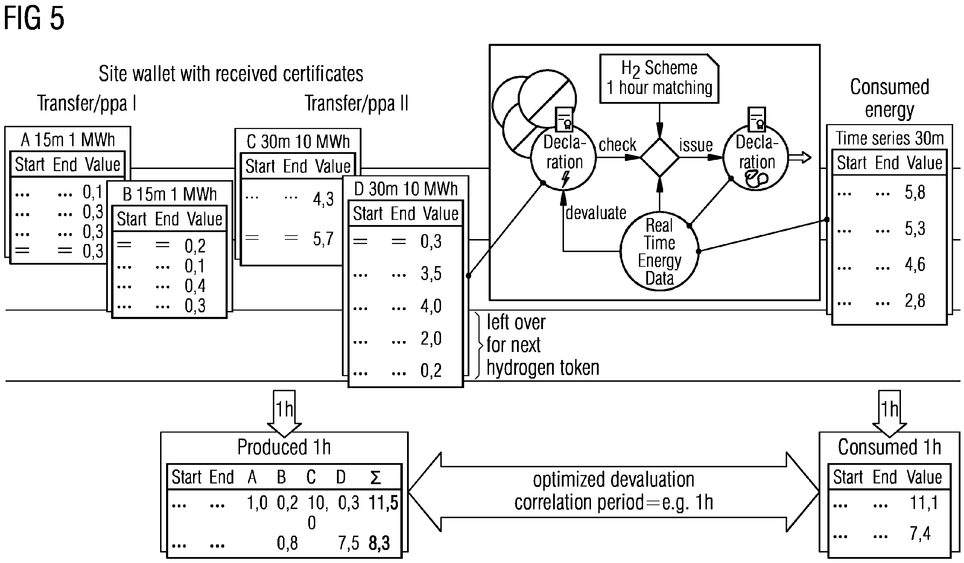

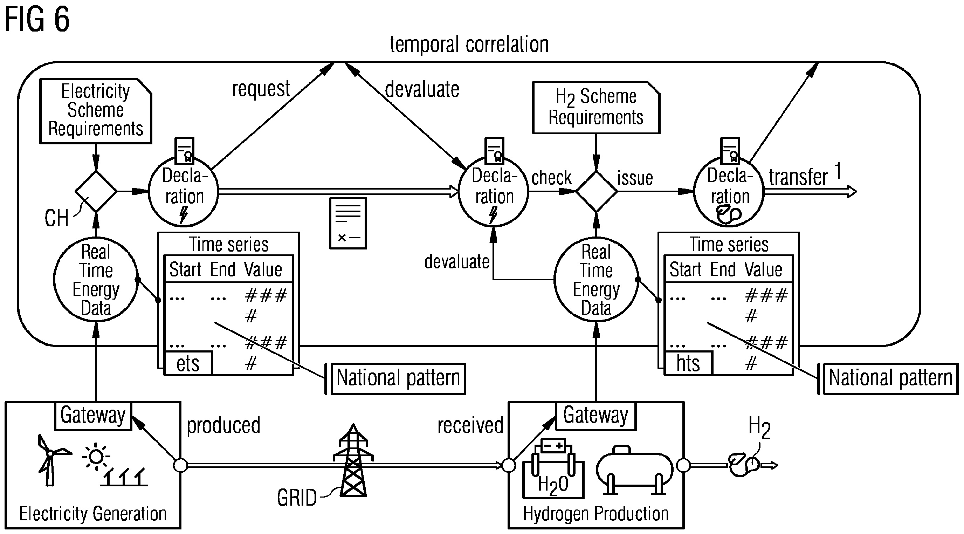

To fulfill temporal correlation (TC) requirements a tem-poral correlation (TC) procedure with the following steps S-A to S-G can be applied as illustrated in the flow chart of Fig.4 and in Figs. 5 to 7.

Initially in a first step S-A a configuration of a tem-poral correlation TC is configured. An organization such as a government of a state can define temporal correlation requirements for specific resources R, in particular for the resource energy E in different energy forms. These re-quired temporal correlations can form part of predefined applied schemes.

A temporal correlation TC indicates a required temporal relationship TR (R1,R2) between a first resource R1 and at least a second resource R2. A resource R can comprise the resource energy E in different forms such as electrical energy (R1=eE) and energy in form of an energy carrier such as the gas hydrogen H2 (R2=hE). Differentiation of resources R can depend on the use case. For instance hy-drogen H2 stored in a tank at a certain first pressure p1 can be seen as a first resource R1 whereas hydrogen H2 stored in a tank at a second pressure p2 can be regarded as a second resource R2. Resources R can be produced or consumed. The consumption of a first resource R1 can con-tribute to the generation of a second resource R2. Energy carriers may vary depending on the use case. Other carries of energy E can comprise other combustion materials in-cluding combustible materials including combustible fuels or gases. Electrical energy eE as a resource R can be stored in different forms and can be distributed in dif-ferent ways, in particular via a power supply grid. Hydro-gen H2 as another resource R can be stored in a tank and can be distributed via pipelines to production assets. Different assets such as production facilities with manu-facturing machines can receive electrical energy eE from the power supply grid or can receive hydrogen H2 as an energy carrier hE to transform at least one first resource R1 (e.g. raw material) into at least one second resource R2 (e.g. intermediate product or final product) at a stage of the resource conversion chain RCC.

The temporal correlation TC can be configurable on an organization tab. The scheme selection can be enhanced to select a temporal correlation as optional part of the scheme.

Correlation of time periods extending over less than a predefined time period (e.g.one day) are managed in a possible embodiment using time series ts as illustrated in Figs.5, 6, 7. The optimized devaluation correlation time period can be for instance 1 h as shown in Fig.5.

A user can select a temporal correlation TC where time series ts are supported by electricity producing assets adapted to produce electrical energy eE (ets).

The user has the further option to select a temporal correlation TC where time series ts are supported by hydrogen (H2)h or other energy carrier producing assets (hts).

In a further step S-B required time related energy data is acquired from an energy (electricity) production meter and an energy consumption energy (electricity) meter.

Temporal correlation TC on a lower time period scale can be achieved with energy meter signal information recorded over time into time series ts.

Depending on technical meter features and time synchronization, a time stamp TS can be provided by a meter, a control system or a time synchronized block-chain agent (BCA) software.

Different possible alternatives of time series (ts) production exist.

A meter (or a control system) can send an energy flow val-ue (e.g. electricity power value kW) without a time stamp TS eg. via a Modbus TCP. A block Chain Agent BCA can be installed on a time synchronized operation system. The time series ts can be calculated per token according to a national time period pattern.

Alternatively a Block Chain Agent BCA can calculate the time series ts per token based on OPC UA time stamps ac-cording to a national time period pattern.

Alternatively a meter can send non clock synchronized time series ts according to a national time period pattern. Then the Block Chain Agent BCA maps the received time pe-riods to clock based on the operating system synchronized time.

Alternatively a meter can send a time synchronized time series ts. Then the Block Chain Agent BCA calculates the time series ts per token according to a national time pe-riod pattern.

Alternatively a meter can send pulses of definite energy amount. These pulses can be converted into signals and then the Block Chain Agent BCA calculates the time series ts per token according to a national time period pattern.

Alternatively a meter operates according to a MID functionality.

In a further step S-C the acquired data can be transferred into the cloud and stored in a memory or data base in combination with the non-fungible energy tokens ENFTs accord-ing to a grid pattern. The Block Chain Agent BCA can sup-port a repetitive transfer of time series (ts) data to the cloud. The transfer of data shall support reduced time de-lays for minting of non-fungible energy tokens ENTFs (e.g. once a minute).

Once the configured amount of energy E for minting an associated non-fungible energy token ENFT (e.g. eENFT or hENFT) has been reached, the energy token ENFT is generat-ed automatically and the associated time series ts can be stored (e.g. off-chain)in a data memory. The non-fungible energy token ENFT can comprise a non-fungible energy token ENFT for energy E carried in a specific energy form such as electrical energy (eE) or hydrogen energy(hE). As a re-sult, each produced non-fungible electricity token eENFT has an assigned electricity time series (ets) according to the local grid pattern.

In addition the electricity consumption of the electrical energy eE can be tracked with a configured balance meter. As a result, each produced non-fungible hydrogen token hENFT for produced hydrogen (h) forming another form of energy E has an assigned time series (hts) according to a local grid pattern.

To enable a simple trading and control of renewable energy E, the energy amount forms in a preferred embodiment the leading parameter for tokenization. An optional parameter is the temporal production/consumption and hence an op-tional time series ts add-on to the token. (A clock time based tokenization e.g. 10:15 - 10:30 with 4,593 MWh has drawbacks regarding token creation during low production times and trading issues).

In a further step S-D the data or time series ts can be converted according to a required time interval (defined in a scheme). For temporal correlation TC, the applicable time pattern can be taken from the scheme definition (e.g. 15 minutes (or 1 hour) needs to be met).

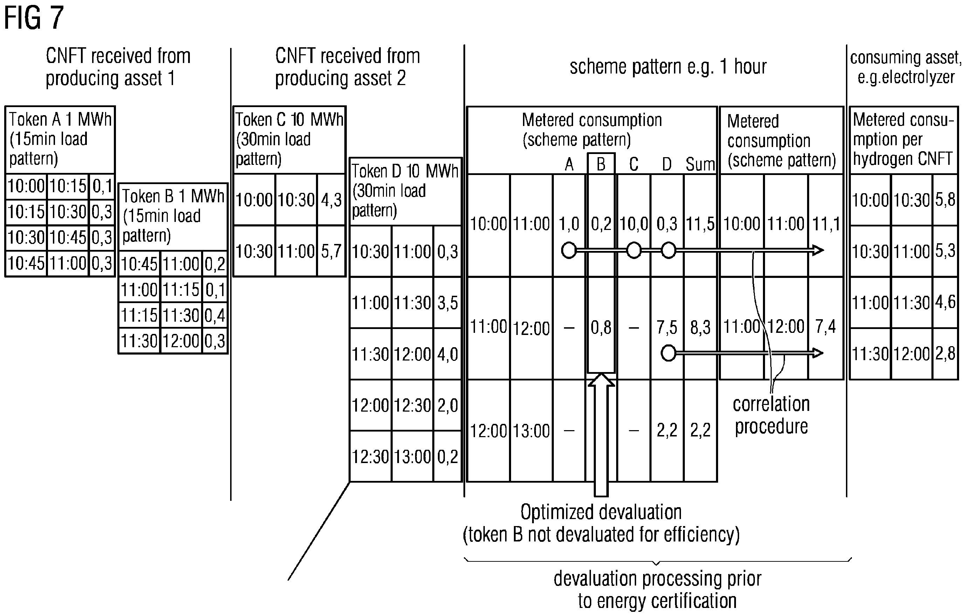

As can be seen in Fig.5 the certificate token in the digi-tal wallet can be transformed to the time basis required according to the scheme (during run time). The time se-ries of the energy certificate token of the produced ener-gy is also transformed during run time. Then a matching is performed, such that a minimum of the certificate token is devaluated as also illustrated in the example of Fig.7. Only then a certificate token for the produced energy is generated. The devaluation processing is performed prior to the energy certification.

Therefore the system converts the time series ts into the required pattern (e.g. 1 hour). This applies to the time series (ts) of the available non-fungible electricity en-ergy token eENFT (ets) as well as to the time series (ts) of the produced non-fungible hydrogen energy token hENFT (hts).

In a further step S-E the energy amount of energy E is matched for the relevant time period.

If a non-fungible hydrogen energy token hENFT is minted for produced hydrogen (H2) as hydrogen energy hE, a com-pliance algorithm CA performed by a compliance check unit CCU does match all relevant time periods of the non-fungible hydrogen energy token hENFT (hts) versus the available time periods of the non-fungible electricity en-ergy token eENFT (ets) of consumed electrical energy eE.

In case of "pay-as-produced" transfer type (supported at present) for devaluation purposes, the system does match with reuse left over electricity eE from the already de-valuated electricity token and checks whether all availa-ble tokens from configured transfers have been received.

A reasonable configurable waiting time limit needs to be considered. An incomplete token can be detected to wait for a successor token. Devaluation of an additional token CNFT is performed in a possible embodiment in such a way, that a minimum of the non-fungible certificate token CNFT is devaluated (the surplus of the token CNFT may be used for monetization).

In a further step S-F the energy related certificates are devaluated by a devaluation unit as also illustrated by the example of Fig.7. If all compliance checks by the com-pliance check unit CCU of the system have been met, then the devaluation of the associated non-fungible certificate token CNFT is executed and a new hydrogen energy certifi-cate (hENFT) along with an associated non-fungible certif-icate token CNFT for the produced hydrogen (H2) can be minted.

This procedure can be repeated for each non-fungible ener-gy token ENFT that seeks for certification.

Finally in step S-G the devaluation of the non-fungible certificate token CNFT performed in step S-F can be re-ported with a new certificate.

The devaluated non-fungible certificate token CNFT for the associated (linked) electricity certificates eENFT of the consumed electricity (eE) can be reported with a generated non-fungible certificate token CNFT for the associated hydrogen certificates hENFT for the produced hydrogen (h). A declaration file can indicate the corresponding electrici-ty certificate IDs and the matched amount of energy per time period. The declaration file can also indicate elec-tricity tokens that were split due to left over approach.

Fig.7 shows an example for illustrating the operation of a possible embodiment of the computer-implemented method for optimized temporal correlation (TC), utilization and devaluation of digital renewable resource certificates used for a resource conversion chain RCC.

In step S1 of the method resource related data is provided by records of the assets within the resource conversion chain RCC. Subsequently a compliance check is performed in step S2 of the method to evaluate whether the resource re-lated data provided by a record of an asset complies with machine interpretable requirements provided in a scheme. A non-fungible certificate token (CNFT) is generated in step S3 of the method as a digital renewable resource certifi-cate if the compliance check of step S2 provides a posi-tive evaluation result. The generated non-fungible certif-icate token (CNFT) is stored in a digital wallet of the owner of the producing asset.

The provided resource related data record can comprise a non-fungible resource token (RNFT). The resource related data record can comprise at least one a non-fungible ener-gy token (ENTF) which is generated automatically as soon as an incremental amount of energy E has been produced by an energy production asset of the resource conversion chain RCC and reported as energy related data by the ener-gy production asset.

The proof of resource consumption is provided by the non-fungible resource token (RNFT) of the resource consumption asset and/or by the asset owner of the resource consump-tion asset. The non-fungible resource token (RNFT), in particular non-fungible energy token (ENTF), associated with a non-fungible certificate token (CNFT) can comprise a token time stamp and assigned load pattern data as il-lustrated in the example of Fig.7
The load pattern data can for instance comprise 15 min load pattern data as provided for token A and token B as-sociated with the CNFT received from energy producing as-set 1 or can comprise 30 min load pattern data as provided for token C and token D associated with the CNFT received from energy producing asset 2 as illustrated in the exam-ple of Fig.7.

The load pattern data is assigned to a non-fungible re-source token (RNFT) according to national grid regulations as illustrated in Fig.7. For instance a scheme pattern of e.g. 1 hour is applied. A national grid specific load pro-file data set (time series) can be linked in a preferred embodiment to each NFT production and consumption asset as illustrated in the example of Fig.7

In the illustrated example of Fig.7 in the hour between 10:00 and 11:00 the metered consumption (scheme pattern) is 1,0 (as indicated in the load pattern of token A) plus 0,2(as indicated in the load pattern of token B) plus 10,0 (as indicated in the load pattern of token C) plus 0,3 (as indicated in the load pattern of token D). Consequently the total the metered consumption in the hour between 10:00 and 11:00 is 11,5 as shown in the table of Fig.7.

The energy consuming asset such as an electrolyzer com-prises a metered consumption per hydrogen CNFT of 11,1 in the hour between 10:00 and 11:00, i.e. 5,8 (in the time between 10:00 and 10:30) plus 5,3 (in the time between 10:30 and 11:00).

As shown in the table of Fig.7 for the time period between 10:00 and 11:00 the summation of 1,0 (contribution of to-ken A) plus 10,0 (contribution of token C) plus 0,3 (contribution of token D) providing the sum value of 11,3 does match best (best temporal correlation) to the consumption of the energy consuming asset (e.g. the electrolyzer), having a consumption value of 11,1.

In the time between 11:00 and 12:00 the best temporal correlation match is achieved between the contribution of to-ken D (i.e. 7,5) and the consumption value of 7,4 as shown in the table of Fig.7.

The load pattern data recorded with the non-fungible resource token (RNFT) is available for devaluation with a transferred non-fungible certificate token (CNFT). The load pattern data for consumption of a resource, in par-ticular energy, by a resource conversion asset or by a re-source consumption asset is recorded with a non-fungible resource token (RNFT), in particular with a non-fungible energy token (ENTF) .

The load pattern data of an available non-fungible certificate token (CNFT) provided in a digital wallet and the load pattern data of the associated non-fungible resource token (RNFT), in particular the associated non-fungible energy token (ENTF), is converted into scheme load pattern data based on an applied scheme temporal correlation re-quirement as illustrated in the example shown in the table of Fig.7.

The devaluation in step S4 of the method according to the present invention is performed automatically with the scheme load pattern data by matching consumption load pat-tern data against the load pattern data of the available non-fungible certificate tokens (CNFTs) in a temporal cor-relation (TC) procedure as shown in the example of Fig.7

The devaluation of the non-fungible certificate tokens (CNFT) stored in the digital wallet is performed in a pre-ferred embodiment by a devaluation optimizer such that a minimum of the non-fungible certificate tokens (CNFTs) is devaluated by checking possible variants or combinations of adding up contribution values as illustrated in the ex-ample of Fig.7. In the given example of Fig.7 token B is not devaluated for reasons of efficiency.

The different embodiments of the method and system accord-ing to the present invention as described above can be combined with each other.

Although the present invention has been described in the above by way of embodiments, it is not limited thereto, but rather can be modified in a wide range of ways. In particular, the invention can be changed or modified in various ways without deviating from the core of the invention.

## Claims

1. A computer-implemented method for optimized utilization and devaluation of digital renewable resource certificates used for a resource conversion chain (RCC) having resource production assets adapted to generate at least one re-source and having conversion assets adapted to consume re-sources for generation of products, the method comprising:
providing (S1) resource related data by records of the assets within the resource conversion chain (RCC);
performing (S2) a compliance check to evaluate whether the resource related data provided by a record of an asset complies with machine interpretable requirements provided in a scheme;
generating (S3) a non-fungible certificate token (CNFT) as a digital renewable resource certificate if the compliance check provides a positive evaluation result and storing the generated non-fungible certificate token (CNFT) in a digital wallet; and
devaluating (S4) automatically a non-fungible certificate token (CNFT) stored in the digital wallet when the associated resource is consumed by a resource consumption asset and proof thereof is provided.

2. The method according to claim 1, wherein the provided resource related data record comprises a non-fungible resource token (RNFT), in particular a non-fungible energy token (ENTF)which is generated automatically as soon as an incremental amount of energy is produced by an energy production asset and reported as energy related data by the energy production asset.

3. The method according to any of the preceding claims, wherein the proof of resource consumption is provided by the non-fungible resource token (RNFT) of the resource consumption asset and/or by the asset owner of the re-source consumption asset.

4. The method according to claim 2 or 3, wherein the non-fungible resource token (RNFT) comprises a token time stamp and assigned load pattern data.

5. The method according to claim 4, wherein load pattern data is assigned to a non-fungible resource token (RNFT) according to national grid regulations.

6. The method according to claim 4 or 5, wherein the load pattern data recorded with the non-fungible resource token (RNFT) is available for devaluation with a transferred non-fungible certificate token (CNFT).

7. The method according to any of the claims 4 to 6, wherein the load pattern data for consumption of a re-source, in particular energy, by a resource conversion as-set or by a resource consumption asset is recorded with a non-fungible resource token (RNFT), in particular with a non-fungible energy token (ENTF).

8. The method according to any of the claims 4 to 7, wherein load pattern data of an available non-fungible certificate token (CNFT) provided in a digital wallet and the load pattern data of the associated non-fungible re-source token (RNFT), in particular the associated non-fungible energy token (ENTF), is converted into scheme load pattern data based on an applied scheme temporal cor-relation requirement.

9. The method according to claim 8, wherein the devalua-tion is performed with the scheme load pattern data by matching consumption load pattern data against the load pattern data of the available non-fungible certificate to-ken (CNFT).

10. The method according to claim 9, wherein the devalua-tion (S4) of the non-fungible certificate tokens (CNFT) stored in the digital wallet is performed by a devaluation optimizer such that a minimum of the non-fungible certifi-cate tokens (CNFTs) is devaluated by checking possible combinations.

11. The method according to any of the claims 1 to 3, wherein the devaluation (S4) of the non-fungible certifi-cate token (CNFT) comprises a token time stamp devalua-tion.

12. The method according to any of the claims 1 to 3, wherein the non-fungible certificate token (CNFT) stored in the digital wallet is devaluated (S4) automatically by expiration as defined in a scheme if no resource consump-tion has taken place and/or no proof of resource consump-tion has been provided.

13. The method according to any of the preceding claims, wherein the resource comprises an environment relevant resource, in particular energy or carbon dioxide.

14. The method according to any of the claims 2 to 12, wherein the energy related data recorded in the non-fungible energy token (ENTF) is checked by a compliance algorithm against machine interpretable scheme require-ments of a scheme provided by a scheme holder to generate an associated non-fungible certificate token (CNFT) if the compliance check provides a positive evaluation result.

15. The method according to any of the preceding claims, wherein resource related data comprises near real time da-ta including machine signals.

16. The method according to claim 15, wherein resource related near real time data is monitored and communicated by a gateway (GW)of the respective asset or is received from other data providers, in particular from a grid operator or from a service provider.

17. The method according to any of the preceding claims, wherein the non-fungible energy token (ENTF) stores information comprising at least one of:
- an NFT Identifier,
- an asset Identifier,
- a meter Identifier ID,
- a signal identifier,
- an energy type,
- a token size of the token,
- a timestamp, a token quality,
- a total CO2 equivalent per token,
- an energy amount.

18. The method according to any of the preceding claims, wherein the non-fungible resource token (RNTF), in particular the non-fungible energy token (ENTF), is encrypted.

19. The method according to any of the preceding claims, wherein the NFT identifier to reference the associated non-fungible resource token (RNTF) and the generated non-fungible certificate token (CNFT) comprises additional certification information including the applied schemes, scheme versions of the applied schemes and the certifica-tion body.

20. The method according to any of the preceding claims, wherein the scheme comprises scheme metadata including a scheme title, a scheme holder, a scheme revision and a scheme validity of the scheme, communication restrictions, requirements regarding the certification process, requirements regarding the certificate holder, and requirements regarding the respective resource.

21. The method according to any of the preceding claims, wherein the non-fungible certificate token (CNFT) is transferred automatically between digital wallets of asset owners, in particular on the basis of a resource purchase agreement between the asset owners.

22. The method according to claim 21, wherein the certificate transfer comprises a pay-as-produced transfer or a Pay-per-use transfer.

23. A system for optimized utilization and devaluation of digital renewable resource certificates used for managing a resource conversion chain (RCC) having resource produc-tion assets adapted to generate at least one resource and having conversion assets adapted to consume resources for generation of products or other resources, in particular by employing a method according to any of the claims 1 to 22, the system comprising:
data records of the assets within the resource conversion chain (RCC) adapted to provide resource related data;
a compliance check unit adapted to perform a compliance check to evaluate whether the resource related data pro-vided by a data record of an asset complies with machine interpretable requirements provided in a scheme;
a token generator adapted to generate a non-fungible certificate token (CNFT) as a digital renewable resource certificate stored in a digital wallet if the compliance check performed by the compliance check unit provides a positive evaluation result; and
a devaluation unit adapted to devaluate a non-fungible certificate token (CNFT) stored in the digital wallet when the associated resource is consumed by a resource consumption asset and proof thereof is provided.

24. The system according to claim 23, further comprising a devaluation optimizer adapted to optimize the devaluation of a non-fungible certificate token (CNFT) stored in the digital wallet by said devaluation unit.

25. The system according to claim 23 or 24, wherein the token generator is adapted to generate automatically a non-fungible energy token (ENTF) as soon as an incremental amount of energy is produced by an energy production asset and reported as energy related data by the energy produc-tion asset to the token generator.

26. The system according to claim 25, wherein the energy related data recorded in the non-fungible energy token (ENTF) is checked by a compliance algorithm executed on the at least one processor of the compliance check unit of the system to perform the compliance check against machine interpretable scheme requirements of a scheme provided by a scheme holder to generate automatically an associated non-fungible certificate token (CNFT) if the compliance check provides a positive evaluation result.

27. A devaluation unit for a system according to any of the claims 23 to 26, wherein the devaluation unit is con-figured to devaluate automatically at least partially a non-fungible certificate token (CNFT) stored in a digital wallet when an associated resource is consumed by a re-source consumption asset and proof thereof is provided to the devaluation unit.

28. A computer program product, comprising a computer readable storage medium having computer readable program code stored therein, said program code being executable by a processor of a computer system to implement a method, comprising commands which, when the program is executed by a computer, cause it to perform at least one of the steps of the computer-implemented method according to any of the claims 1 to 22.
